Europäisches Patentamt

European Patent Office

Office européen des brevets

(11) Publication number: **0 602 340 A1**

# EUROPEAN PATENT APPLICATION

(21) Application number: **93116609.4**

(22) Date of filing: **14.10.93**

(51) Int. Cl.5: **H04Q 7/04**, H04B 7/26

(30) Priority: **14.12.92 GB 9226020**

(43) Date of publication of application:
**22.06.94 Bulletin 94/25**

(84) Designated Contracting States:
**AT CH DE ES FR IT LI NL SE**

(71) Applicant: **MOTOROLA LTD**
**Jays Close,**
**Viables Industrial Estate**
**Basingstoke, Hampshire RG22 4PD(GB)**

(72) Inventor: **Crichton, Paul**
**29 Blandys Hill**
**Kintbury, Nr. Newbury, Berks RG15 0UF(GB)**

Inventor: **Buck, Stephen**
**33 Hampton Drive**
**Swindon, Wilts(GB)**
Inventor: **Oberoi, Rupinder**
**18 Wesley Court**
**Wooton Bassett, Swindon, Wilts(GB)**

(74) Representative: **Dunlop, Hugh Christopher et al**
**Motorola**
**European Intellectual Property Operations**
**Jays Close**
**Viables Industrial Estate**
**Basingstoke, Hampshire RG22 4PD (GB)**

(54) **A cellular communications system and method for hand-off therein.**

(57) A cellular communications system (20) has at least first (36) and second (37) base stations located in first (27) and second (28) cells and a mobile communications device (50) for communicating with the base stations (36, 37) and capable of moving at speed from the first cell to the second cell. Information, identifying the cell to which the mobile device (50) is moving, is collected and stored. Furthermore, parameters associated with communications between the mobile device and the first base station are measured. From these parameters alone, a time at which the mobile device (50) will reach a notional boundary between the first and second cells is es- timated. When the notional cell boundary is being reached, the mobile device (50) commences a hand- over operation with the second base station (37) in the second cell (28).

FIG.2

## Background of the Invention.

This invention relates, in general, to cellular communications systems and particularly to a method of hand-off control therein.

## Summary of the Prior Art.

In a cellular communications system, such as the GSM cellular communications system, it is necessary to pay particular attention to sell cite planning in order to minimise costs for the infrastructure associated with the cellular system. More specifically, in order to obtain sufficient communications coverage at the extremities of cells of the cellular system, it is necessary to provide coverage overlap between adjacent cells. As will be appreciated, mobile communications devices located in these coverage overlap areas will undergo hand-off between adjacent cells, subject to signal strength and quality considerations.

If a cellular system contains, for example, a high speed road or rail link, such as the proposed 500kmh European Railways system, there is a requirement that coverage overlap between adjacent cells is large in order to accommodate mobile communication devices of the cellular system moving through cells at great speed. A requirement for a large coverage overlap arises from the time required to hand-off a mobile communication device between adjacent cells.

In prior art cellular communications systems, the mobile communications device has to monitor the control channels of several surroundings cells and initiate a hand-off when it identifies that an adjacent cell provides a better received signal than the present serving cell. Any prior knowledge the mobile communications device has regarding spectral locations of the control channels of surrounding cells is limited to a list of several control channels showing varying signal strengths.

Typically, the time required to assess whether a hand-off is required and to facilitate the hand-off is in the order of 5 seconds; approximately 4 seconds of which is required to determine whether a hand-off is required and approximately one second to implement the physical hand-over. In the case of a high speed rail link, a locomotive moving through a cell at 500kmh, traverses approximately 140 metres of track per second. Therefore, it can be seen that at least 700 metres of coverage overlap in excess of any overlap in any current system are required to ensure that hand-off is accomplished successfully. Clearly, in a cellular system having a large number of high density small cells, typically 2.5 kilometres in radius, the cost of implementing the required additional coverage overlap is substantial.

## Summary of the Invention.

This invention addresses at least some of the deficiencies prevalent in the prior art described above. In accordance with the invention there is provided a cellular communications system comprising at least first and second base stations located in first and second cells and a mobile communications device for communicating with the base stations and capable of moving at speed from the first cell to the second cell. The cellular communications system comprises: means for accepting and storing information identifying the cell to which the mobile device is moving; means for measuring parameters associated with communications between the mobile device and the first base station; means for estimating, from those parameters alone, a time at which the mobile device will reach a notional boundary between the first and second cells; and means for causing the mobile device to commence a hand-over operation with the second base station in the second cell when the notional cell boundary is being reached.

The information identifying the cell to which the mobile device is moving is stored at a location associated with the first base station and the means for estimating are associated with the first base station. Alternatively, the information identifying the cell to which the mobile device is moving is stored at the mobile and the means for estimating are associated with the mobile device. The means for estimating the time at which the mobile device will reach the notional boundary are arranged to extrapolate a decrease in a signal parameter associated with distance and to initiate hand-over when the parameter crosses or is expected to cross a threshold. The signal parameter may be signal strength or bit error rate. Furthermore, the means for causing the mobile to commence hand-over are arranged to suppress hand-over if the signal strength or bit error rate respectively decreases at a rate greater than a rate associated with increasing distance alone. Additionally, the means for causing the mobile to commence hand-over are arranged to suppress hand-over if a further parameter indicates that distance between the mobile device and the first base station is decreasing at a lesser rate than is indicated solely by the signal strength or bit error rate respectively.

In a further aspect of the present invention, there is provided a cellular communications system comprising at least first and second base stations located in first and second cells and a mobile communications device for communicating with the base stations and capable of moving along a predetermined path from the first cell to the second cell. The cellular communications system comprises means for accepting and storing information identifying the cell to which the mobile device is moving; indicator means located at a point along the predetermined path for providing a hand-over instruction to the mobile device; and means for causing the mobile device to commence a hand-over operation with the second base station in the second cell when the mobile device passes the indicator means.

In yet another aspect of the present invention, there is provided a method for determining hand-off for a mobile communications device between cells of a cellular communications system. The method comprises the steps of: receiving a succession of measurable parameters emanating from a first base station in a first cell; determining a trend in a rate of change of the measurable parameters; comparing the trend with a profile forecast for the rate; handing-off control of the mobile communications device from the first base station in the first cell to a second base station in a predetermined second cell at a predetermined moment in time determined by the profile; and not handing-off control when the trend substantially differs from the profile.

An exemplary embodiment of the present invention will now be described with reference to accompanying drawings.

## Brief Description of the Drawings.

Fig. 1 illustrates areas of coverage overlap required in a prior art cellular communication system with a high speed railway passing through.

Fig. 2 illustrates a cellular communication system in accordance with the present invention.

Fig. 3 illustrates a mobile communication device suitable for implementation in the system of Fig. 2.

Fig. 4 illustrates a profile for signal strength received by a mobile communication device as it passes through the cellular communication system of Fig. 2.

Fig. 5 illustrates a typical rate of change of signal strength for the communication device of Fig. 2 as it travels through a cell in which there is an obstruction to radio propagation.

Fig. 6 illustrates a typical timing advance profile for the communication device of Fig. 2 as it travels through a cell.

Figs. 7 and 8 are a flow chart for a hand-off procedure for the communication device of Fig. 3.

## Detailed Description of a Preferred Embodiment.

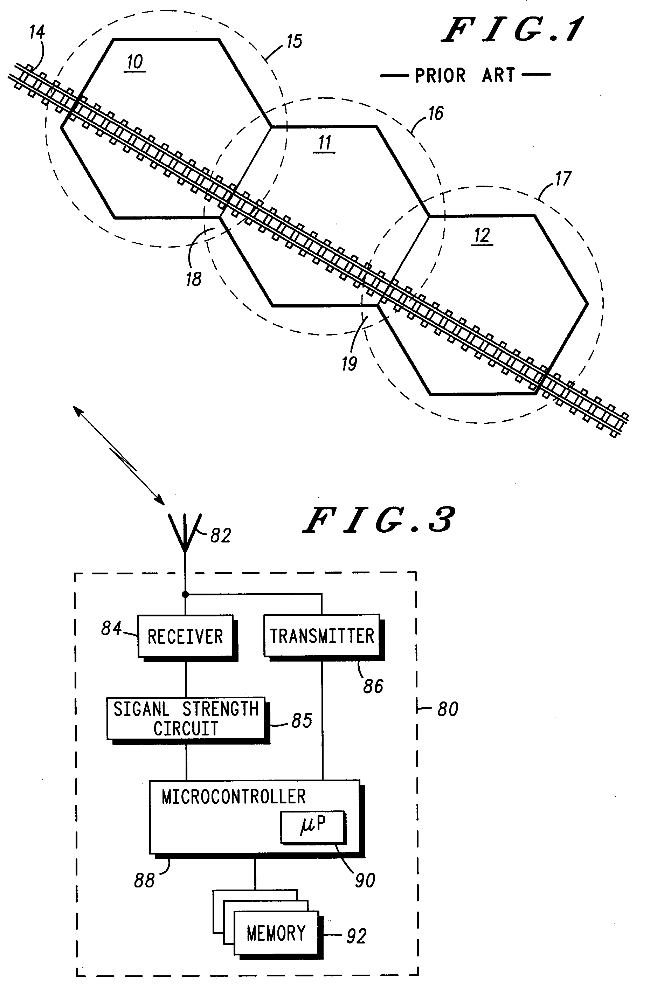

With reference to Fig. 1, there is shown a number of adjacent cells 10-12 of a prior art cellular communication system, having a high speed railway 14, such as the proposed European Railways 500kmh railway link, running through the adjacent cells 10-12. At substantially the centre of each cell, there is located a base station (not shown) for providing coverage to the particular cell. The base stations provide a coverage area 15-17 for cells 10-12 respectively. As can be seen, coverage areas 15 and 16 and coverage areas 16 and 17 overlap for a substantial area 18, 19 at the boundaries between the appropriate cells.

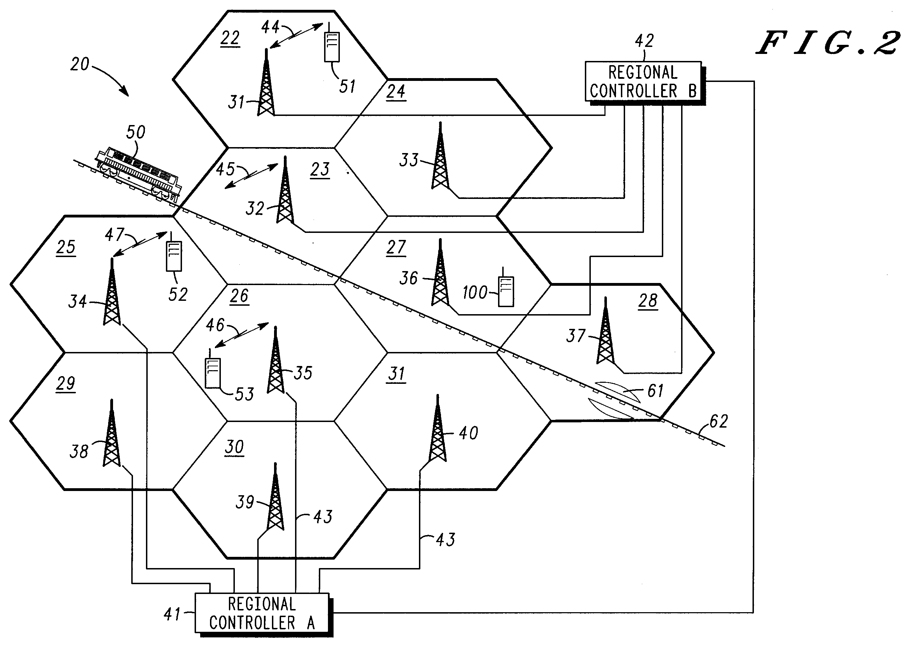

Referring to Fig. 2, there is shown a preferred embodiment of a cellular communications system. The communications system 20 comprises a plurality of adjacent coverage areas 22-31 each comprising a base station 31-40 respectively, substantially located at a coverage epicentre for the cell. Each base station is linked to a regional controller 41, 42 through, typically, a wire-line link 43. As will be appreciated, the regional controllers 41, 42 maintain overall system control of the cellular communications system. Each base station 31-40 contains a transceiver for transmitting both control information such as synchronization words and channel grant commands, and communication signals, such as encoded speech or data, to mobile communications devices responsive to the information 43-47 and roaming throughout the communications system. The transceivers of the base stations 31-40 also receive information from the mobile communication devices. Information received from the mobile communications devices will comprise, for example, encoded audio and/or data signals, channel request telegrams and other telegrams.

In Fig. 2, the mobile communication devices 50-53 are dispersed throughout the cells. More specifically, mobile communication device 50 is located on a high speed train 60 that is travelling through the communication system along a predefined railway track 62. The track 62 sequentially passes through cells 23, 27 and 28 of the communication system.

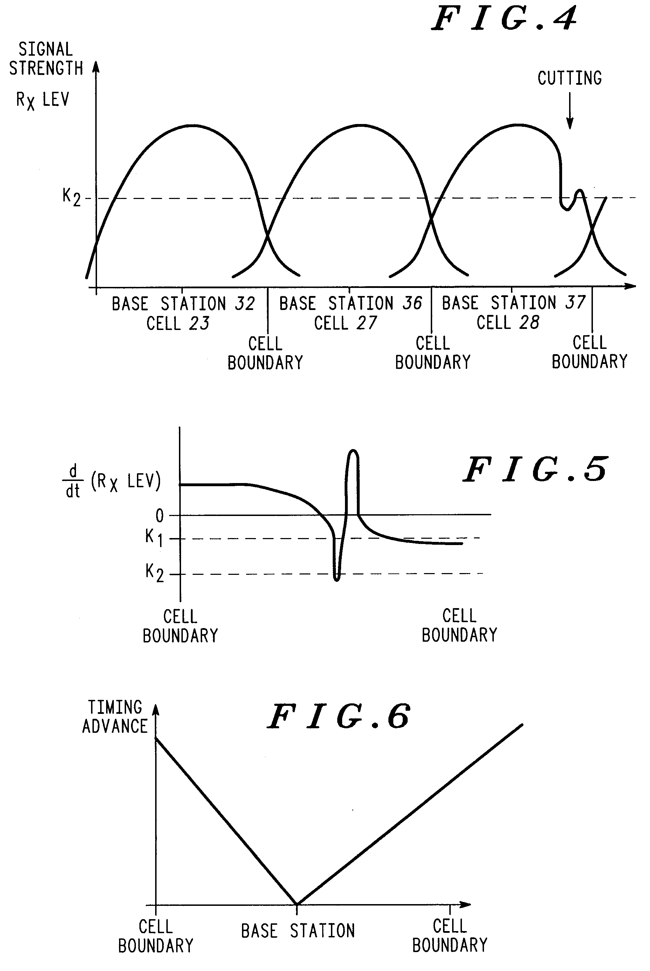

Fig. 3 illustrates a preferred embodiment of a mobile communications device that can be used in the cellular communication system of the present invention. The communications device 80 comprises an antenna 82 for receiving and transmitting signals and receiver circuitry 84 and transmitter 86 circuitry coupled thereto. A micro-controller 88 coupled to the receiver circuitry 84 through a signal strength circuit 85, controls the operation of the receiver circuitry 84. The micro-controller 88 is further coupled to the transmitter circuitry 86 and controls operation thereof. The micro-controller comprises a microprocessor 90 which performs the processing of information, such as the interpolation and extrapolation of data as described below. A memory, such as a random access memory RAM or EPROM, stores data transmitted to the mobile communications device in the signals sent thereto. The memory 92 is coupled to the micro-controller 88.

Fig. 4 illustrates a typical signal strength (Rx lev) profile for a signal received by the mobile communication device 50 located on the high speed train of Fig. 2. As the mobile communications device 50 approaches the base station 32 in cell 23 the signal strength of the signal received by the mobile communication device increases to a maximum value corresponding to a point where the communications device 50 is in close proximity to the base station 32, whereafter the signal strength diminishes in an exponential manner.

Referring again to Fig. 2, it can be seen that in cell 28 there is a cutting 61 through which the track 62 passes. When the mobile communications device 50 enters the cutting, the signal strength will rapidly diminish at a rate substantially quicker than the decay rate for the signal strength if the mobile communications device 50 was unaffected by the cutting. This is illustrated at the right hand side of Fig. 4.

Fig. 5 shows the first differential of the signal strength measurements of Fig. 4 for cell 28 (the cell in which the cutting is located). The first differential shows a large negative value as the train and the mobile device enter the cutting and a large positive value as they come out of the cutting. The significance of this is explained below.

With reference to Fig. 6 there is shown a timing advance profile transmitted as a control signal from the base station to the mobile unit 50 for cell 28. The timing advance signal is used to synchronise information transmitted from the mobile communications device 52 with a base station such that when the information is received at the base station the information is substantially synchronised to an allocated time-slot. This is explained in GSM Specification 05.10.

The timing advance indicates the distance of a mobile communications device from the base station. Clearly, a signal propagation delay becomes less apparent as a mobile communications device travels along the track approaching the base station. Therefore, the timing advance signal is reduced, as illustrated. In an analogous manner, as the mobile communications device travels away from the base station, the timing advance must be increased in order to achieve time-slot synchronization. It will be noted that the timing advance does not show significant changes as the mobile communications device passes through the cutting. The significance of this is explained below.

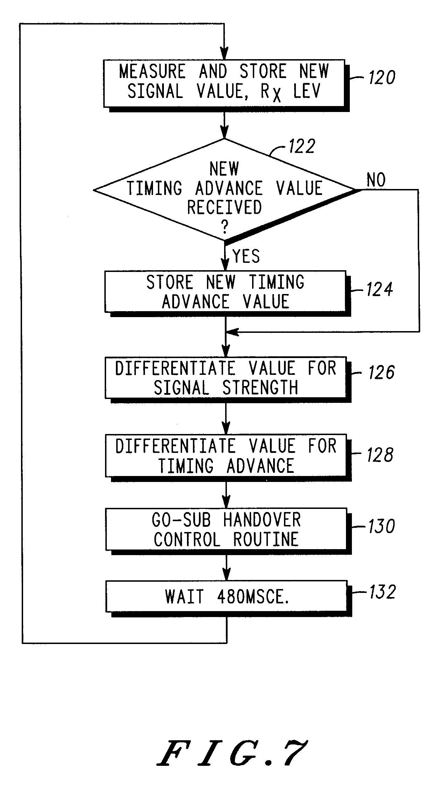

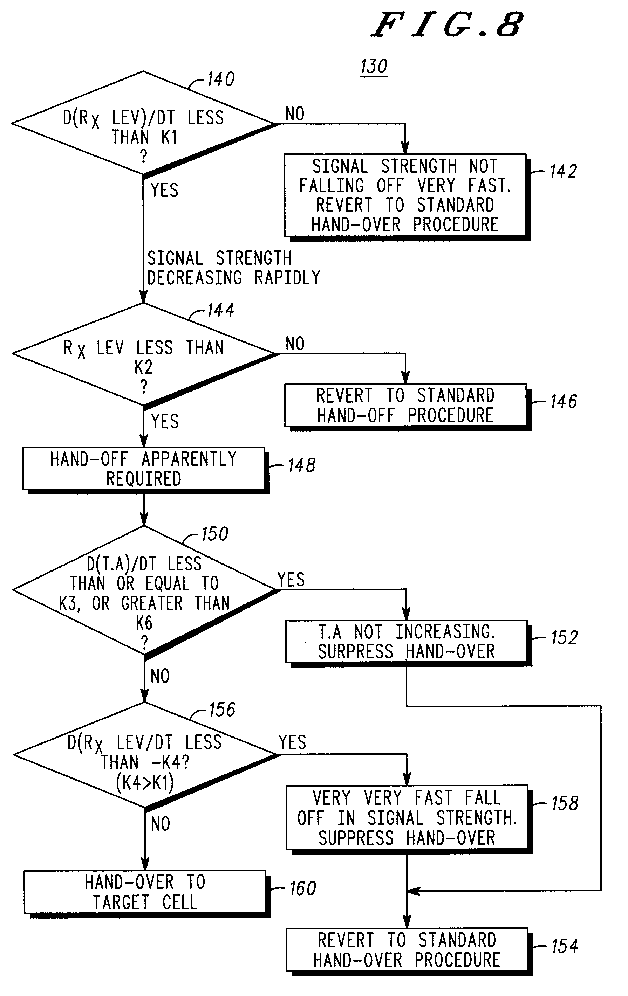

Referring now to the flow diagram of Figs. 7 and 8, there is shown a preferred method by which the mobile communication device 50, which may be travelling at high speed, hands-off between adjacent cells. The communications device 50 measures and stores (120) a succession of signal strength values Rx lev in its memory 92. At 122, the communications device determines whether a new timing advance signal has been received and, if so, stores (124) the new timing advance value in a dedicated location in the memory 92. It will be appreciated that timing advance values are transmitted to the communications device 50 at regular intervals of distance (or time). These intervals may be of any length but, typically, correspond to a distance of ~600 metres (approximately once every 4.3 seconds for mobile communications device travelling at 500kmh). The storage of signal strength and timing advance data allows the communications device to subsequently extrapolate or interpolate a trend in either. The stored values for signal strength and timing advance are differentiated to determine a rate of change in the level and value respectively (126 and 128 respectively). As will be appreciated, in an alternative embodiment, the differentiated values for the measured parameters of signal strength and timing advance may be stored, in memory 92, in the place thereof or ancillary to the measured parameters. Once the parameters of signal strength and timing advance have been differentiated, a hand-over decision 130 is undertaken based upon the most recent rate and change in both parameters in association with any trend in the change, i.e. whether it is representative of what has gone immediately before. As will be further appreciated, it is necessary to compile a number of samples of the parameters in order that a trend can be identified. Clearly, the greater number of sample, typically taken over each 480ms cycle, the greater the probability of a correct hand-over; although there is an optimum number between extremes. When the hand-over decision 130, in terms of the method illustrated in the flow diagram of Fig. 8, has been completed, the communications device 50 waits 132 for up to 480ms and then commences the operating procedure again.

With reference to Fig. 8, if 140 the differential of a current rate of change for a measured signal strength $d/dt(Rx\ lev) > K_1$, where $K_1$ is a predetermined negative constant, the signal strength is not falling very quickly and the mobile communications device reverts to a standard hand-over procedure 142 in accordance with techniques known to one of ordinary skill in the art. At 144 the current signal strength level Rx lev is reviewed in light of a second constant $K_2$. If the level is greater than this predetermined threshold $K_2$, the mobile communications device reverts to a standard hand-over procedure 146 in accordance with techniques known to one of ordinary skill in the art. If the current signal strength level Rx lev is less than $K_2$, a hand-off is apparently required 148.

In order to ensure that an incorrect hand-off does not result from mobile communications device 50 entering a cutting 61, or being subject to a multiple transmission path, the signal strength information is interpreted in light of a trend 150 in a rate of change of timing advance. If it is outside a range 152 defined by constants $K_3$ and $K_6$, the mobile communications device is currently subject to a multiple transmission path or has entered an area having poor signal coverage, e.g. the cutting 62. As such, the timing advance is not increasing and any hand-over is suppressed. The procedure subsequently reverts to the standard hand-over procedure 154 in accordance with techniques known to one of ordinary skill in the art. If the rate of change of timing advance is inside the predefined range 156, the current rate of change of signal strength is reviewed in light of a further predefined constant $K_4$. The constant $K_4$, where $K_4 > K_1$, represents a drop-off in signal strength that is typically representative of that received by a mobile communications device in a poor coverage area, such as the cutting. If the rate of change in the level is below $K_4$, there has been a very very fast fall-off in signal strength that is unrepresentative of the coverage area. The hand-off is suppressed and the procedure reverts to the standard hand-over procedure 154 in accordance with techniques known to one of ordinary skill in the art. If the rate of change satisfies the criterion of 156, a hand-off is initiated 160 from the base station to which it is currently affiliated in its current cell (the "serving cell") to another base station in a predetermined target cell.

The predetermined target cell is an adjacent cell that is the next cell en route for the mobile communications device (as defined by the path of the railway track 62). The target cell is identified to the mobile communications device either by programming the mobile communications device (e.g. by insertion of a smart card unique to the railway route in question that lists the control channels of the succession of cells through which the mobile communications device will pass) or by over-the-air communication from the current base station that simply identifies the next control channel in the direction of travel (or the control channels of the cells on either side from which the mobile communications device can deduce the next control channel in the sequence). There is no need for the mobile communications device to compare the current control channel signal strength with several adjacent control channel signal strengths. Therefore, there is an increase in probability that the hand-over will be to the correct cell. Furthermore, hand-over can commence before the mobile communications device has entered the coverage area of the target cell to any significant distance. The action of hand-over causes control logic contained in the infrastructure, e.g. the regional controllers, to terminate any previous and now redundant connection between a base station and the mobile communications device, and to record register of the mobile communications device with the base station of the target cell.

It will be appreciated that although reference is made to the rate of change of signal strength with respect to time, the reference should be construed as also referring to the differential of signal strength with respect to the natural logarithm of time since the profile of signal strength illustrated in Fig. 4 is an exponentially decreasing function.

Summarising the description of the preferred embodiment of the invention so far, the mobile communications device 50 (in accordance with techniques known to one of ordinary skill in the art) monitors signal strength Rx lev of a received signal transmitted from a base station responsible for control of the cell in which it is currently located. This signal strength information is stored in the memory of the communications device. In addition, timing advance signals received from the base station are sequentially stored in the memory 92. From the stored information retained in memory 92, a rate of change of the signal strength is calculated by the microprocessor 90 of the microcontroller 88. The trend in the rate of change of the signal strength is monitored and the mobile communications device identifies when it is approaching or moving away from a base station. If, however, the mobile communications device travels through a cutting, for example, or into a forest, there will be a rapid change in signal strength represented by a spike and dip in figures 4 and 5 respectively. Clearly, this trend in the rate of change of signal strength can be used to determine whether hand-off is required. In addition, in order to avoid hand-off at an incorrect time e.g. when the mobile communications device is travelling through, say, a cutting, the stored information relating to the timing threshold can be considered. More specifically, a trend in the timing advance which is increasing would clearly indicate that the device is moving away from the base station. Provided that both the trend in the rate of change of the signal strength and the timing advance have passed a predetermined threshold level, then the mobile communications device initiates a hand-off to the base station responsible for control of the next coverage cell. The action of hand-over causes control logic contained in the infrastructure, e.g. the regional controllers, to terminate any previous and now redundant connection between a base station and the mobile communications device, and to record register of the mobile communications device with the base station of the target cell.

In a further embodiment of the present invention, a number of strategically placed short range radio transmitters 100, as illustrated in Fig. 2, are provided. A short range transmitter is located at a periphery of a cell 27 and in close proximity to the track 62. The location of the short range transceiver is chosen to indicate a notional coverage boundary between two adjacent cells. The notional coverage boundary represents a location having a signal strength, measured from a base station in the next coverage cell, sufficient to allow the mobile communications device 50 to successfully hand-off control. Once a mobile communications device 50 has passed the short range transceiver 100, and has received a dedicated signal transmitted therefrom, the mobile communications device 50 initiates a hand-off to the base station responsible for control of the next coverage cell.

In yet another embodiment, the information stored in the memory relating to the rate of change of either parameter may be used to extrapolate a time, in within a certain confidence level, at which hand-off between adjacent cells is required. Furthermore, this extrapolated information can be used to interpret a hand-off decision independent of, or ancillary to, the flow methodology indicated in Figs. 7 and 8.

Clearly, an invention so designed and described provides the novel advantages of a cellular communications system having an improved hand-off methodology that can anticipate the requirement for hand-off between adjacent cells, based on interpretation of trend measurements. This improved hand-off procedure provides the additional benefit that coverage overlap between cells can be reduced with a resultant saving in infrastructure costs. Furthermore, the methodology is particularly suitable for implementation with communication devices that travel at high speed through a cellular communications system.

It will be understood that the above description has been given by way of example only and that modifications in detail, such as the measurement of signal quality in the form of bit error rate BER, for example, instead of signal strength, may be made within the scope of this invention. Additionally, the mobile communication device is not limited to the combined use of both trends, i.e. signal strength and timing advance, in order to anticipate the requirement for hand-off; the use of either one of the trends would suffice. It will further be appreciated that the compilation of information relating to signal strength and/or timing advance trends can be stored at either a central controller or a base station. Therefore, in a further embodiment, the base station may anticipate the requirement for a hand-off and therefore initiate such.

## Claims

1. A cellular communications system comprising at least first and second base stations located in first and second cells and a mobile communications device for communicating with the base stations and capable of moving at speed from the first cell to the second cell, comprising:

    means for accepting and storing information identifying the cell to which the mobile device is moving;

    means for measuring parameters associated with communications between the mobile device and the first base station;

    means for estimating, from those parameters alone, a time at which the mobile device will reach a notional boundary between the first and second cells; and

    means for causing the mobile device to commence a hand-over operation with the second base station in the second cell when the notional cell boundary is being reached.

2. A system according to claim 1, wherein the information identifying the cell to which the mobile device is moving is stored at a location associated with the first base station and the means for estimating are associated with the first base station.

3. A system according to claim 1, wherein the information identifying the cell to which the mobile device is moving is stored at the mobile and the means for estimating are associated with the mobile device.

4. A system according to any one of the preceding claims, wherein the means for estimating the time at which the mobile device will reach the notional boundary are arranged to extrapolate a decrease in a signal parameter associated with distance and to initiate hand-over when the parameter crosses or is expected to cross a threshold.

5. A system according to claim 4 wherein the signal parameter is signal strength.

6. A system according to claim 4 wherein the signal parameter is bit error rate.

7. A system according to any one of claims 5 or 6 wherein the means for causing the mobile to commence hand-over are arranged to suppress hand-over if the signal strength or bit error rate respectively decreases at a rate greater than a rate associated with increasing distance alone.

8. A system according to any one of claims 5 or 6 wherein the means for causing the mobile to commence hand-over are arranged to suppress hand-over if a further parameter indicates that distance between the mobile device and the first base station is decreasing at a lesser rate than is indicated solely by the signal strength or bit error rate respectively.

9. A cellular communications system comprising at least first and second base stations located in first and second cells and a mobile communications device for communicating with the base stations and capable of moving along a predetermined path from the first cell to the second cell, comprising:

    means for accepting and storing information identifying the cell to which the mobile device is moving;

    indicator means located at a point along the predetermined path for providing a hand-over instruction to the mobile device; and

    means for causing the mobile device to commence a hand-over operation with the second base station in the second cell when the mobile device passes the indicator means.

10. A method for determining hand-off for a mobile communications device between cells of a cellular communications system, comprising the steps of:

    a) receiving a succession of measurable parameters emanating from a first base station in a first cell;

    b) determining a trend in a rate of change of the measurable parameters;

    c) comparing the trend with a profile forecast for the rate;

    d) handing-off control of the mobile communications device from the first base station in the first cell to a second base station in a predermined second cell at a predetermined moment in time determined by the profile; and

    e) not handing-off control when the trend substantially differs from the profile.

11. A cellular communications system substantially as described herein with reference to Figs. 2 to 9 of the accompanying drawings.

12. A method for determining hand-off for a mobile communications device between cells of a cellular communications system substantially as described herein with reference to Figs. 2 to 9 of the accompanying drawings.

# *FIG.1*

— PRIOR ART —

*FIG.3*

RECEIVER

TRANSMITTER

SIGANL STRENGTH CIRCUIT

MICROCONTROLLER

μP

MEMORY

FIG.2

EP 0 602 340 A1

## *FIG.4*

SIGNAL
STRENGTH

$R_X$ LEV

CUTTING

$K_2$

BASE STATION *32*
CELL *23*

BASE STATION *36*
CELL *27*

BASE STATION *37*
CELL *28*

CELL
BOUNDARY

CELL
BOUNDARY

CELL
BOUNDARY

## *FIG.5*

$\frac{d}{dt}(R_X$ LEV$)$

0
$K_1$
$K_2$

CELL
BOUNDARY

CELL
BOUNDARY

## *FIG.6*

TIMING
ADVANCE

CELL
BOUNDARY

BASE STATION

CELL
BOUNDARY

MEASURE AND STORE NEW
SIGNAL VALUE, R$_X$ LEV — 120

NEW
TIMING ADVANCE VALUE
RECEIVED
? — 122

NO

YES

STORE NEW TIMING
ADVANCE VALUE — 124

DIFFERENTIATE VALUE FOR
SIGNAL STRENGTH — 126

DIFFERENTIATE VALUE FOR
TIMING ADVANCE — 128

GO-SUB HANDOVER
CONTROL ROUTINE — 130

WAIT 480MSCE. — 132

# *FIG.7*

# *FIG.8*

*130*

*140*

D(Rx LEV)/DT LESS THAN K1 ? — **NO** →

**SIGNAL STRENGTH NOT FALLING OFF VERY FAST. REVERT TO STANDARD HAND-OVER PROCEDURE** *142*

**YES**

SIGNAL STRENGTH DECREASING RAPIDLY

*144*

Rx LEV LESS THAN K2 ? — **NO** →

**REVERT TO STANDARD HAND-OFF PROCEDURE** *146*

**YES**

**HAND-OFF APPARENTLY REQUIRED** *148*

*150*

D(T.A)/DT LESS THAN OR EQUAL TO K3, OR GREATER THAN K6 ? — **YES** →

**T.A NOT INCREASING. SURPRESS HAND-OVER** *152*

**NO**

*156*

D(Rx LEV/DT LESS THAN −K4? (K4>K1) — **YES** →

**VERY VERY FAST FALL OFF IN SIGNAL STRENGTH. SUPPRESS HAND-OVER** *158*

**NO**

**HAND-OVER TO TARGET CELL** *160*

**REVERT TO STANDARD HAND-OVER PROCEDURE** *154*

European Patent
Office

PARTIAL EUROPEAN SEARCH REPORT

Application Number

which under Rule 45 of the European Patent Convention EP 93 11 6609
shall be considered, for the purposes of subsequent
proceedings, as the European search report

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | EP-A-0 369 535 (PHILIPS ELECTRONIC AND ASSOCIATED INDUSTRIES LIMITED) | 1,2 | H04Q7/04 |
| A | * column 3, line 17 - line 39 *<br>* column 5, line 32 - column 6, line 7 *<br>* column 7, line 24 - line 42 *<br>--- | 4 | H04B7/26 |
| X | EP-A-0 240 051 (STAAT DER NEDERLANDEN)<br>* page 2, line 26 - page 5, line 16 *<br>* page 7, line 2 - line 17 *<br>* page 8, line 24 - line 31 *<br>* claim 13 *<br>--- | 9 | |
| X | BELL LABORATORIES RECORD<br>vol. 47, no. 3 , March 1969 , MURRAY HILL, NEW JERSEY US<br>pages 77 - 84<br>C.E.PAUL 'Telephones Abroad the "Metroliner"'<br>* page 79, right column, line 30 - line 45 *<br><br>* page 80, right column, line 6 - line 35 *<br><br>--- <br>-/-- | 9 | |

TECHNICAL FIELDS
SEARCHED      (Int.Cl.5)

H04Q
H04B

## INCOMPLETE SEARCH

The Search Division considers that the present European patent application does not comply with
the provisions of the European Patent Convention to such an extent that it is not possible to carry
out a meaningful search into the state of the art on the basis of some of the claims
Claims searched completely :
Claims searched incompletely :
Claims not searched :
Reason for the limitation of the search:

see sheet C

| Place of search | Date of completion of the search | Examiner |
|---|---|---|
| THE HAGUE | 22 March 1994 | Behringer, L |

EPO FORM 1503 03.82 (P04C07)

| | DOCUMENTS CONSIDERED TO BE RELEVANT | | CLASSIFICATION OF THE APPLICATION (Int.Cl.5) |
|---|---|---|---|
| Category | Citation of document with indication, where appropriate, of relevant passages | Relevant to claim | |
| A | PATENT ABSTRACTS OF JAPAN vol. 16, no. 280 (E-1221) & JP-A-04 070 095 (NIPPON TELEGRAPH & TELEPHONE CORPORATION) * abstract * --- | 1,2,9 | |
| A | 41ST IEEE VEHICULAR TECHNOLOGY CONFERENCE. GATEWAY TO THE FUTURE. TECHNOLOGY IN MOTION 19 May 1991 , ST. LOUIS, MO, USA pages 531 - 536 XP000260234 S.T.S.CHIA 'The control of handover initiation in microcells' * page 532, left column, paragraph 3 - page 534, left column, paragraph 4 * --- | | TECHNICAL FIELDS SEARCHED    (Int.Cl.5) |
| X,P | PATENT ABSTRACTS OF JAPAN vol. 17, no. 283 (E-1373) & JP-A-05 014 265 (TOSHIBA CORPORATION) | 1-3 | |
| A,P | * abstract * ----- | 9,10 | |

EP 93 11 6609

-C-

INCOMPLETE SEARCH

Claims searched completely: 1-5,8-12
Claims searched incompletely: 6,7

Claims 6,7: It is known in the art that a reduction of
received field  strength leads to an
increase in the bit error rate.
The application states that a decrease in the
received field strength is combined  with a
reduction at the bit error rate